# EUROPEAN PATENT SPECIFICATION

(11) **EP 1 606 931 B1**
(45) Date of publication and mention of the grant of the patent: **21.04.2010**
(21) Application number: 04717569.0
(22) Date of filing: 05.03.2004
(51) Int. Cl.: H04N 1/00

(54) **METHOD FOR SHARING MULTIMEDIA DATA**
VERFAHREN ZUR GEMEINSMEN BENUTZUNG VON MULTIMEDIA-DATEN
PROCEDE DE PARTAGE DE DONNEES MULTIMEDIA

(30) Priority: 20.03.2003 FR 0303389
(43) Date of publication of application: 21.12.2005
(73) Proprietor: Eastman Kodak Company, Rochester NY 14650-2201 (US)
(72) Inventor: TOUCHARD, Nicolas Patrice Bernard, Kodak Industrie, 71102 Chalon Sur Saone Cedex (FR); VAU, Jean-Marie, 71102 Chalon Sur Saone Cedex (FR)
(74) Representative: Weber, Etienne Nicolas
(86) International application number: PCT/EP2004/002278
(87) International publication number: WO 2004/084536

(56) References cited:
- EP-A- 1 133 151
- EP-A- 1 278 366
- EP-A- 1 317 124
- WO-A-00/62542
- WO-A-99/56463
- US-A1- 2001 001 865
- US-A1- 2001 010 543
- US-A1- 2001 032 335
- US-A1- 2002 088 000
- US-A1- 2002 138 847

## Description

### Technical field

The present invention relates to a method for sharing multimedia data and in particular a method for sharing multimedia data captured by many people attending the same event.

By multimedia data is meant, image data, sound or music recordings, video clips, text or any combination of images, sound, music, text and video.

The invention has applications especially for sharing images captured during a public event that takes place in a defined location, but during which all the people attending the event do not have the same facility or the same opportunity to capture images. This situation is found mainly during sporting or cultural events attended by large numbers of spectators. For example, the spectators attending a football match may be more or less well placed to take photographs, according to how the game evolves in one or another area of the pitch.

### State of the prior art

Digital image management systems are known that offer users, provided with a mobile phone or similar equipment, the option of going at any moment to a central server of images captured using a digital camera. The latter can be integrated or not with the mobile phone.

Especially US 2001/0010593 and WO 00/62542 disclose methods for capturing and transmitting multimedia data, including digital images.

Images reaching the central server are stored and linked with an identification means specific to each user or to each routed image. The user can thus afterwards go to browse their images, as a remote photo album. Browsing can take place by means of a digital photographic frame, a computer, or by means of any other equipment provided with a display screen and a means of connection to a communication network appropriate for image transfer. The images are transmitted for example by the Internet and/or telephone network.

The user can also order, in certain cases, the transmission of their images to addressees of their choice, or the printing of proofs of the images.

Thus, image management systems enable image sharing, to some extent. However, this sharing remains limited to a restricted circle of people identified by the user.

However, the main interest of remote image management systems remains that of offering users the opportunity to regularly unload the buffer memory of their camera, in order to enable new shots. This aspect is especially important for mobile phones equipped with shot sensor, whose capacity to transmit images easily compensates for a rather modest buffer memory. In particular, images can be automatically transmitted to the image management system server in response to each triggering of a shot.

### Description of the invention

It is the object of the invention to propose a method for sharing digital multimedia data on a large scale, enabling a considerable number of users to have access to multimedia data relating to an event.

One object is to organize the collection of multimedia data but also data distribution, while ensuring the data is specific to a given event.

Yet another object is to control an access right to the shared data.

To achieve these objects, the invention relates more specifically to a method for sharing multimedia data captured by many cameras and/or sound recorders provided with image transmission means. The method comprises:
- the reception of multimedia data routing messages that include multimedia data and at least some event data,
- the linking to each multimedia data of an identifier according to the event data, and the saving of said multimedia data,
- the reception of multimedia data requests also comprising at least some event data,
- the search for at least one saved multimedia data, linked to an identifier according to an event data corresponding to the event data of the request, and
- if the search finds at least one multimedia data, the transmission of the multimedia data to an addressee.

The addressee is generally the transmitter of the multimedia data request message, even if the designation of a different addressee can be envisaged.

The multimedia data routing messages can come from many users, equipped, for example, with mobile phones with built-in image sensor. These messages include multimedia data, relative to one or more images, to sounds, or to text, and moreover, the event data.

As their name shows, the event data aim to identify the event to which the multimedia data refer. This is for example geographic localization data and temporal data. These data enable a central server to sort multimedia data according to the event to which they refer. Therefore, the central server can include a table, regularly updated, and giving for a number of referenced events, the place and time of their scheduling.

As a simple illustration, the table can contain information according to which a football match is taking place in a certain stadium, in a particular time frame. The stadium can be simply identified by a code or by its geographic coordinates. Similarly, the table can contain information according to which a concert is taking place in a certain hall, in a particular time frame.

Before the storing of the multimedia data, the multimedia data is linked with an identifier according to one or more event data linked with the multimedia data. The identifier can, in a particular case, amount to place and date data; it can also be a code assigned to an event or, yet more simply, be the indication of a memory or part of memory that is to receive the multimedia data. Part of the memory can be linked with each referenced event.

Users wishing to obtain multimedia data of the event, although they are not attending it, or are not in a favorable place for shooting or recording sound, can send multimedia data requests to the server sharing the multimedia data. The request is simply a message that consists in asking for the images, sounds or any other type of multimedia data. The request may include data or information specifying the type of multimedia data required. To define the required data, in this case those relating to the relevant event, image request users also transmit one or more event data with the request.

Thus, the search for the required multimedia data takes place by comparison between the event data used as identifier, or to form the identifiers, and the event data of the multimedia data requests. The coincidence or at least the matching between the event data of the stored multimedia data and those of the multimedia data requests enables retaining the multimedia data to be transmitted. The event data of the multimedia data requests can also be linked to identifiers, so that the search for the desired images can take place by comparison of the identifiers rather than by comparison of the event data.

The search for multimedia data that correspond with the wishes of a user requesting multimedia data and their transmission to the user can be operations subject to conditions. Therefore, the request message for multimedia data can contain data usable as a condition of execution of the search and transmission operations. The condition can be, for example, a condition of subscription, payment, supply of multimedia data, place of transmission of multimedia data request and/or date of multimedia data request. In particular, the fact of having routed multimedia data to the server sharing the multimedia data can be a condition of a later request for multimedia data supplied by other users.

Further, the routing of the multimedia data to the server can also be subject to conditions of date and place of transmission, to prevent the storage of "interference" data, i.e. data that does not match a listed event. The event data is thus used not only to classify the routed multimedia data, but also for their filtering.

As mentioned above, the event data, both for routing multimedia data and for the multimedia data request can in particular be time data and/or geographic data. It is, for example, the date and place of the transmission of the routing message or the multimedia data request message. By "date" is meant time information whose accuracy can be less than a day. In this case the date can comprise information with hours, minutes, or even seconds.

The place of transmission of the routing messages or multimedia data request messages can be fixed for example by a global positioning system (GPS) built into the device for shooting, sound recording, using the related radio transmission means. Similarly, the date can be given by a clock specific to the portable equipment. However, for a better guarantee of accuracy and objectivity of the event data, the date and place of sending the routing or multimedia data request messages can be supplied by the mobile phone or telecommunications operator that relays the message transmission. In particular, the transmission place can be determined by triangulation among transmission relays. The date can be given by a clock inside the portable equipment or inside the communication gateway managed by the mobile phone operator.

When the event data are established by the telecommunications operator, the creation of an identifier and the linking of each multimedia data to an identifier can be done to choice by the telecommunications operator or by the data sharing service provider.

In particular the method targets the sharing of images in which the routing messages and image requests come from cameras provided with a connection to a telecommunications network, such as mobile phones with built-in image sensor. The images supplied by users thus equipped can be completed by images taken by professional photographers using more sophisticated cameras. This enables high quality images to be made available to the user, corresponding to the event the user is attending, or for which they have indicated their interest in to the service provider.

The invention also relates to a program that can be downloaded to portable communications equipment, provided with a display and camera, comprising instructions suited to sending routing and multimedia data request messages, to execute the method described above.

Other characteristics and advantages of the invention will appear in the following description, with reference to the figure of the appended drawing. This description is given purely as an illustration and is not limiting.

### Brief description of the figure

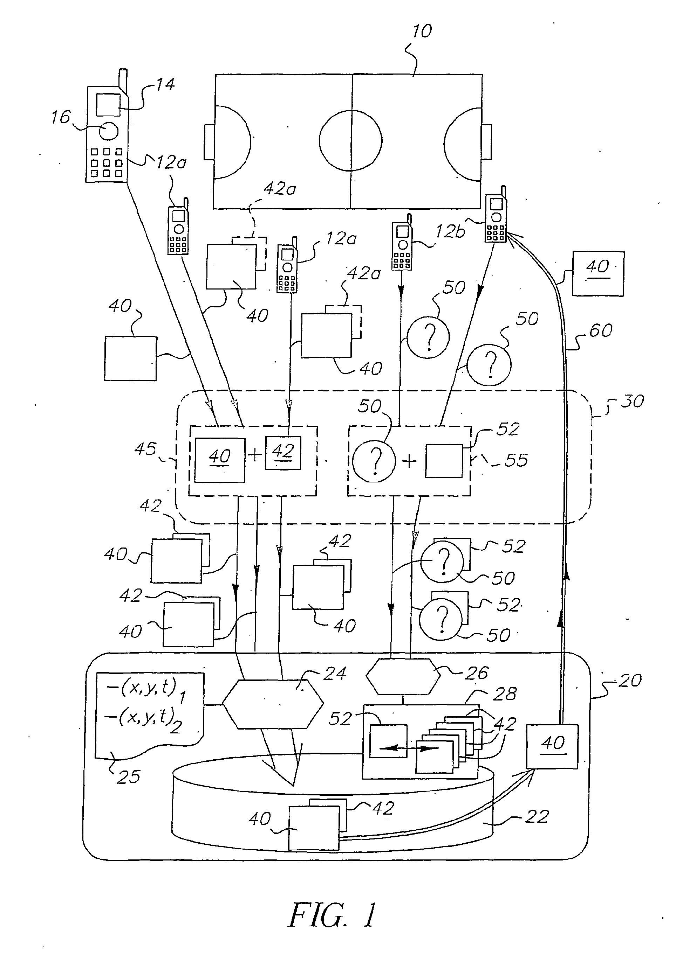

Figure 1, alone, is a diagrammatic and simplified representation of a particular implementation of a method according to the invention. In order to be clear, the various parts of the figure are not represented according to a uniform scale.

### Description of the embodiments of the invention

The following text describes a particular example of sharing multimedia data which is image sharing. Other types of data, or other multimedia content can nevertheless be treated in the same way.

Item 10 of Figure 1 shows very symbolically a stadium in which a sporting, cultural or social event is taking place and at which many spectators are present. Item 12a shows mobile phones provided with a display 14 and a built-in digital camera 16. These mobile phones represent a category of portable devices combining the functions of shooting, display and telecommunications. They are suited to images or to video. The users of telephones 12a acquire digital images that they can display to view on the screen 14. They can also send routing messages of image data to an image sharing provider. The routing takes place by means of a communications network, such as the telephone network, the Internet or any other suitable network.

The image sharing provider has a server 20 for collecting and distributing image data. This is provided with a memory 22 intended to store data.

The users of mobile phones can also address the image sharing provider to ask it to supply them with image data. This is the case for users of mobile phones 12a routing image data, but also for other telephone users 12d, and in particular those unfavorably placed in relation to the center of the event. Users of this second category send image request messages to the server 20 so as to obtain images acquired by better placed users. To simplify the description in the following text we will use the item 12a to designate the equipment of users who are routing images and the item 12d for the equipment of those requesting them.

It should be noted immediately that the same user can be part of the two categories by supplying and requesting images. It may also be noted that the telephones 12d, or the equipment they represent, are not necessarily provided with image sensor and are not necessarily located in the neighborhood of the event. Indeed, according to a particular embodiment of the method, the item 12d can also embrace devices such as personal computers linked to the communication network and provided with a display.

The data routing messages are transmitted from the telephones 12a to the server 20 by means of an operator 30 of mobile phones or more generally telecommunications. This is shown in summary by a dotted line.

The messages sent from the telephones 12a include image data 40. The operator 30 ensures the routing of the image data 40 to the server 20 and establishes, at the same time, additional data such as the message transmission place and date data. The place can be established by triangulation among various message reception antennas and the date can be given by a clock. These additional data 42 are linked to the image data and are indicated by event data. The event data can also include other information such as the codes transmitted by the users of the telephones 12a. The place and date information can also be supplied automatically by the telephones 12a. The operation 45, consisting in linking the image data 40 and the event data 42, can be done by the user, by the operator 30 and/or by the image sharing provider, whether automatically or not. The Figure illustrates more precisely a situation in which the event data 42 are linked to the image data 40 by the mobile phone operator. Any event data that are directly linked to the image data by the user are shown by dotted line with the item 42a.

The images 40, completed with event data 42, are directed to the server where they cross a first filter 24. The filter 24 can be linked to a table 25 holding an events list for which the sharing service is supplied. The table 25 contains, for example, place and date data, or more generally event data, corresponding to the listed events. The event data of the incoming image routing messages are compared with those of the table 25 to determine if the images are held or not for image sharing. If this is not the case the image data can be rejected or directed to another type of processing. In other words, the comparison is used to condition the image processing.

The selected images are saved in the memory 22 and are linked to an identifier. The identifier is, for example, the event data of the image or any code set according to the event data. In the example of the Figure, the selected identifier is simply the event data 42 of the image. The identifier enables an image to be found in a part or a register of the memory. It should be noted that an identical identifier may be linked to all the images from the same event, i.e. for example, to all the images sent from a given place in a given time period. The identifier can also include a component that is a function of the transmitter of the image routing message.

The image request messages are shown by the item 50. They are transmitted from the mobile phones 12d and also pass by a mobile phone operator. In the example shown, this is the same mobile phone operator 30. An operation shown by the item 55 consists in linking the event data 52 to the image request messages. This operation is comparable to that marked by the item 45. It is simply distinguished on the Figure to make the description clear. In other words, the image request messages like the image routing messages are linked to event data to identify an event to which the messages refer.

The image requests are received by the server. A filter 26 ensures that only requests relative to a held events list are retained. For example these are the events of the table 25 already described. The filtering takes place using the event data as criteria. Here again, the filtering operations 24 and 26 can be combined. The event data 52, or part of this data, or again additional data, can be used by the filter to submit the search and transmission of multimedia data to additional conditions. The condition can be linked or not to a user, to a place, to a date, to a payment, etc.

The item 28 designates the search, in response to an image request, for an image held in the memory 22. The search is performed according to the image identifiers 42. More precisely, it is performed so as to retain the images linked to one or more identifiers according to event data 42 corresponding to the event data 52 of the image request.

In a particular embodiment, the memory 22 can be searched for all the images for which the event data 42 refer to the same event as the event data 52 of an image request. This amounts to making a correlation between the event data of the image requests and the stored images. If these correspond to the same place and same time window, the transmission of the stored images to their addressee can take place. The identifiers of the stored images can also include a code that must match with a code contained in the event data of the image requests.

As indicated above, the images 40 found during the search are transmitted to the mobile phone 12d from which the image request came. This transmission is symbolized by an arrow 60.

Finally, without there being any other link between the users, an image 40 captured by the mobile phone 12a of a first user can be viewed on the screen of a mobile phone 12d of another user. Remember that the mobile phone here represents a whole range of multimedia devices comprising display means, communication means and possibly shooting means.

## Claims

1. A method for sharing multimedia data captured by a plurality of cameras or sound recorders provided with multimedia data transmission means, comprising :
- the reception by a server (20) of multimedia data routing messages, the routing messages including multimedia data (40) and at least some event data (42),
- the linking to each multimedia data of an identifier according to the event data, and the storing of said multimedia data in the memory (22) of server (20),
- the reception by the server of multimedia data requests (50) from users wishing to obtain multimedia data of the event also comprising at least some event data (52),
- the search for at least one stored multimedia data, linked to an identifier according to an event data (42) corresponding to the event data (52) of the request, and
- if the search finds at least one multimedia data, the transmission of the multimedia data to an addressee.

2. A method for sharing multimedia data according to Claim 1, wherein the multimedia data include data relative to images, video clips, sound recordings, text and/or any combination of such data.

3. A method according to Claim 1, wherein the event data contained in the multimedia data routing message are set according to the place and date of transmission of the routing message.

4. A method according to Claim 1, wherein the event data are established by a telecommunications operator (30) transmitting the multimedia data routing messages.

5. A method according to Claim 4, wherein the linking of the images with an identifier is performed by the telecommunications operator or by an image sharing service provider.

6. A method according to Claim 1, wherein at least one of the search operations for saved multimedia data and their transmission to an addressee are conditional operations.

7. A method according to Claim 6, wherein the multimedia data requests include at least one data usable as a condition of execution of the search and transmission operations.

8. A method according to Claim 7, wherein the data usable as a condition of execution is an event data contained in the image request.

9. A method according to Claim 1, wherein the routing messages and multimedia data requests are from cameras/sound recorders provided with a connection to a telecommunications network, such as mobile phones with built-in image sensor.

10. A method according to Claim 1, wherein the multimedia data requests are from multimedia data capturing devices and image displays provided with a connection to a telecommunications network, such as mobile phones with viewing screen, suited to image or video.

11. A method according to Claim 1, comprising, on reception of the routing messages, a comparison of the event data of the multimedia data routing messages with previously recorded event data.

## Patentansprüche

1. Verfahren zur gemeinsamen Nutzung von Multimediadaten, die von einer Vielzahl von mit Multimediadaten-Übertragungsmitteln versehenen Kameras oder Tonaufnahmegeräten erfasst werden, mit den Schritten:
- Empfangen von Mitteilungen über die Weiterleitung von Multimediadaten durch einen Server (20), wobei die Mitteilungen Multimediadaten (40) und mindestens einige Ereignisdaten (42) umfassen;
- Verknüpfen einer den Ereignisdaten entsprechenden Kennung mit den jeweiligen Multimediadaten und Speichern der Multimediadaten im Speicher (22) des Servers (20);
- mittels des Servers Empfangen von Multimediadaten-Anfragen (50) von Benutzern, die Multimediadaten des Ereignisses erhalten wollen, die mindestens auch einige Ereignisdaten (52) umfassen;
- Suchen mindestens einer gespeicherten Multimediadateneinheit, die mit einer einer Ereignisdateneinheit (42) entsprechenden Kennung verknüpft ist und den Ereignisdaten (52) der Anfrage entspricht; und
- wenn bei der Suche mindestens eine Multimediadateneinheit gefunden wird, Übertragen der Multimediadaten an einen Adressaten.

2. Verfahren zur gemeinsamen Nutzung von Multimediadaten nach Anspruch 1, worin die Multimediadaten Daten umfassen, die sich auf Bilder, Videoclips, Tonaufnahmen, Text und/oder Kombinationen aus all diesen Daten beziehen.

3. Verfahren nach Anspruch 1, worin die in der Mitteilung über die Weiterleitung der Multimediadaten enthaltenen Ereignisdaten erstellt werden gemäß dem Ort und dem Datum der Weiterleitung der Mitteilung.

4. Verfahren nach Anspruch 1, worin die Ereignisdaten von einem Telekommunikationsbetreiber (30) festgelegt werden, der die Mitteilung über die Weiterleitung der Multimediadaten überträgt.

5. Verfahren nach Anspruch 4, worin das Verknüpfen der Bilder mit einer Kennung vom Telekommunikationsbetreiber oder von einem Dienstanbieter für die gemeinsame Nutzung von Bildern durchgeführt wird.

6. Verfahren nach Anspruch 1, worin mindestens einer der Suchvorgänge für gespeicherte Multimediadaten und ihre Übertragung an einen Adressaten an eine Bedingung geknüpfte Vorgänge sind.

7. Verfahren nach Anspruch 6, worin die Multimediadaten-Anfragen mindestens eine Dateneinheit enthalten, die als Bedingung für die Ausführung des Such- und Übertragungsvorgangs verwendbar ist.

8. Verfahren nach Anspruch 7, worin die Dateneinheit, die als Bedingung für die Ausfiihrung verwendbar ist, eine Ereignisdateneinheit ist, die in der Bildanfrage enthalten ist.

9. Verfahren nach Anspruch 1, worin die Mitteilungen über die Weiterleitung und die Multimediadaten-Anfragen von Kameras/Tonaufnahmegeräten stammen, die mit einem Anschluss an ein Telekommunikationsnetzwerk ausgestattet sind, beispielsweise von Mobiltelefonen mit eingebautem Bildsensor.

10. Verfahren nach Anspruch 1, worin die Multimediadaten-Anfragen von Multimediadaten-Erfassungsgeräten und von Bilddisplays stammen, die mit einem Anschluss an ein Telekommunikationsnetzwerk ausgestattet sind, beispielsweise von für Bild- und Videoaufzeichnungen geeigneten Mobiltelefonen mit Anzeigebildschirm.

11. Verfahren nach Anspruch 1, wobei beim Empfangen der Mitteilungen über die Weiterleitung ein Vergleich der Ereignisdaten der Mitteilungen über die Weiterleitung der Multimediadaten mit zuvor aufgezeichneten Ereignisdaten erfolgt.

## Revendications

1. Procédé de partage de données multimédia saisies par une pluralité de caméras ou d'enregistreurs de sons dotés de moyens de transmission des données multimédia, lequel procédé comprend :
• la réception par un serveur (20) de messages de routage de données multimédia, lesquels messages de routage comprennent des données multimédia (40) et au moins quelques données d'évènements (42),
• le rattachement d'un identifiant à chaque donnée multimédia en fonction des données d'événements et l'enregistrement desdites données multimédia dans la mémoire (22) du serveur (20),
• la réception par le serveur de demandes de données multimédia (50) de la part d'utilisateurs souhaitant obtenir les données multimédia de l'évènement comprenant également au moins certaines données d'évènements (52),
• la recherche d'au moins une donnée multimédia enregistrée rattachée à un identifiant en fonction d'une donnée d'évènement (42) correspondant aux données d'évènements (52) de la demande, et
• si la recherche permet de trouver au moins une donnée multimédia, la transmission de la donnée multimédia à un destinataire.

2. Procédé de partage de données multimédia selon la revendication 1, dans lequel les données multimédia comprennent des données relatives aux images, aux clips vidéo, aux enregistrements sonores, aux textes et/ou à une combinaison quelconque de ces données.

3. Procédé selon la revendication 1, dans lequel les données d'évènements contenues dans le message de routage des données multimédia sont déterminées en fonction de la place et de la date de transmission du message de routage.

4. Procédé selon la revendication 1, dans lequel les données d'évènements sont établies par un opérateur de télécommunications (30) transmettant les messages de routage des données multimédia.

5. Procédé selon la revendication 4, dans lequel le rattachement des images à un identifiant est mis en oeuvre par l'opérateur de télécommunications ou par un fournisseur de services de partage d'images.

6. Procédé selon la revendication 1, dans lequel au moins l'une des opérations de recherche des données multimédia sauvegardées et leur transmission à un destinataire sont des opérations conditionnelles.

7. Procédé selon la revendication 6, dans lequel les demandes de données multimédia comprennent au moins une donnée utilisable comme condition d'exécution des opérations de recherche et de transmission.

8. Procédé selon la revendication 7, dans lequel la donnée utilisable comme condition d'exécution est une donnée d'évènement contenue dans la demande d'image.

9. Procédé selon la revendication 1, dans lequel les messages de routage et les demandes de données multimédia proviennent de caméras/enregistreurs de sons dotés d'une connexion à un réseau de télécommunications, tels que des téléphones mobiles dans lesquels sont incorporés des capteurs d'images.

10. Procédé selon la revendication 1, dans lequel les demandes de données multimédia proviennent de dispositifs de saisie de données multimédia et de dispositifs d'affichage d'images dotés d'une connexion à un réseau de télécommunications, tels que des téléphones mobiles dotés d'un écran de visualisation, appropriés aux images ou à la vidéo.

11. Procédé selon la revendication 1, consistant, à la réception des messages de routage, à effectuer une comparaison entre les données d'évènements des messages de routage des données multimédia et les données d'évènements préalablement enregistrées.
